# FASCICULE DE BREVET EUROPEEN

(11) **EP 0 579 550 B1**
(45) Date de publication et mention de la délivrance du brevet: **16.10.1996**
(21) Numéro de dépôt: 93401828.4
(22) Date de dépôt: 15.07.1993
(51) Int. Cl.: B60S 1/34

(54) **Bras d'essuie-glace**
Scheibenwischerarm
Windscreen wiper arm

(30) Priorité: 15.07.1992 FR 9208705
(43) Date de publication de la demande: 19.01.1994
(73) Titulaire: VALEO SYSTEMES D'ESSUYAGE, 78180 Montigny-Le-Bretonneux (FR)
(72) Inventeur: Raymond, Bernard, F-75019 Paris (FR)
(74) Mandataire: Gamonal, Didier

(56) Documents cités:
- WO-A-81/00235
- FR-A- 2 239 101
- US-A- 3 042 955

## Description

La présente invention concerne un bras d'essuie-glace, notamment pour un essuie-glace de véhicule automobile.

L'invention concerne plus particulièrement un bras d'essuie-glace du type comportant un élément principal, également appelé tige, de forme générale allongée dont une première extrémité est montée articulée, autour d'un axe d'articulation, par l'intermédiaire d'une pièce d'articulation appelée carter réalisée en tôle découpée et pliée, sur une tête d'entraînement du bras d'essuie-glace, et dont l'autre extrémité est reliée à un balai d'essuie-glace, et du type comportant des moyens de liaison, agencés au voisinage de la première extrémité de l'élément principal, pour relier le bras d'essuie-glace à un organe, tel que par exemple un ressort de traction, qui le sollicite en rotation autour de son axe d'articulation sur la tête d'entraînement comme cela est décrit dans le document US-A-3 042 955.

Le ressort de traction qui sert à appliquer au bras d'essuie-glace un couple nominal d'essuyage est fixé par l'une de ses extrémité au bras d'essuie-glace et par son autre extrémité à la tête d'entraînement.

Selon l'état de la technique, l'extrémité du ressort de traction qui est relié au bras d'essuie-glace coopère avec une portion de la première extrémité de la tige, agencée à l'intérieur du carter d'articulation, qui est conformée pour constituer un moyen d'accrochage de l'extrémité du ressort de traction.

Lors de l'assemblage de l'élément principal du bras d'essuie-glace, constitué par la tige, et du carter d'articulation, la position longitudinale relative entre ces deux éléments détermine donc deux paramètres fonctionnels, c'est-à-dire d'une part le rayon de balayage du balai d'essuie-glace et, d'autre part, la valeur de l'effort et donc du couple -nominal, exercé par le ressort.

Afin de dissocier ces deux paramètres, il a, par exemple, déjà été proposé de relier l'extrémité du ressort de traction à un axe transversal qui traverse les flancs latéraux parallèles du carter d'articulation et dont les extrémités sont serties.

Cette solution accroît sensiblement le coût de fabrication de l'ensemble du bras d'essuie-glace et est nuisible du point de vue esthétique dans la mesure où les extrémités de l'axe d'accrochage du ressort sont visibles à l'extérieur sur les flancs latéraux du carter d'articulation.

Afin de remédier aux inconvénients qui viennent d'être mentionnés, l'invention propose un bras d'essuie-glace du type mentionné précédemment tel que révélé par US-A-3 042 955 et défini dans le préambule de la revendication 1, caractérisé en ce que lesdits moyens de liaison comportent au moins une patte de liaison réalisée en une seule pièce avec ladite pièce d'articulation et s'étendant transversalement à partir d'un bord inférieur d'un des flancs latéraux, de manière à ce que l'organe qui sollicite le bras en rotation prenne appui directement ou indirectement sur ladite patte.

Selon des modes de réalisation de l'invention :
- la patte de liaison s'étend transversalement à l'intérieur du carter ;
- la patte de liaison comporte une première portion sensiblement rectiligne qui s'étend transversalement, depuis le bord inférieur, dans un plan perpendiculaire aux flancs latéraux et parallèle à la direction longitudinale ;
- la patte de liaison comporte une deuxième portion sensiblement rectiligne qui prolonge la première portion, qui est coplanaire à la première portion et qui s'étend selon une direction longitudinale ;
- la patte de liaison comporte une deuxième portion sensiblement rectiligne qui prolonge la première portion et qui s'étend dans un plan transversal perpendiculaire aux flancs latéraux et perpendiculaire à la direction longitudinale ;
- la seconde portion de la patte de liaison comporte au moins un trou d'accrochage ;
- les moyens de liaison comportent une pièce de liaison fixée à la patte de liaison ;
- la pièce de liaison est fixée par sertissage, ou par rivetage et/ou par soudage ;
- le bras d'essuie-glace présente une symétrie de conception par rapport à un plan longitudinal médian ;
- la pièce de liaison s'étend transversalement et ses deux extrémités transversales opposées sont fixées à deux pattes de liaison opposées ;
- la pièce de liaison est une plaque qui s'étend dans un plan parallèle à la direction longitudinale ;
- la pièce de liaison est une plaque qui s'étend dans un plan perpendiculaire à la direction longitudinale ;
- la plaque de liaison comporte au moins un trou d'accrochage ;
- la pièce de liaison est un axe d'accrochage ;
- chacune des deux extrémités transversales de la pièce de liaison est montée sertie dans un prolongement de la première portion de la patte de liaison correspondante ;
- chacune des deux extrémités transversales de la pièce de liaison est fixée par rivetage sur la première portion de la patte de liaison correspondante ;
- les deuxièmes portions des deux pattes de liaison opposées s'étendent transversalement au moins partiellement en vis-à-vis l'une de l'autre ;
- l'organe qui sollicite le bras en rotation est un ressort de traction ou de compression.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de dessous en perspective illustrant un premier mode de réalisation d'un bras d'essuie-glace conforme aux enseignements de l'invention ;
- la figure 2 est une vue du flan de tôle découpé servant à la réalisation, par pliage, du carter du bras d'essuie-glace illustré à la figure 1 ;
- la figure 3 est une vue latérale en perspective du carter d'articulation partiellement plié ;
- la figure 4 est une vue similaire à celle de la figure 2 illustrant une variante de réalisation permettant l'accrochage de deux ressorts de traction ;
- la figure 5 est une vue partielle en perspective similaire à celle de la figure 1 illustrant une variante de réalisation pour l'utilisation d'un ressort de compression.

La figure 6 est une vue en section transversale d'une variante de réalisation du carter d'articulation, prise selon la ligne 6-6 de la figure 7 ;
- la figure 7 est une vue en section selon la ligne 7-7 de la figure 6 ;
- la figure 8 est une vue similaire à celle de la figure 2 illustrant une portion de flan de tôle pour la réalisation du carter illustré aux figures 6 et 7 ;
- la figure 9 est une vue en section, selon la ligne 9-9 de la figure 10, similaire à celle de la figure 6, illustrant une variante de réalisation du carter d'articulation ;
- la figure 10 est une vue en section selon la ligne 10-10 de la figure 9.

Les figures 11 à 13 sont des vues similaires à celles des figures 6 à 8 illustrant une variante de réalisation ;
- les figures 14 à 16 sont des vues similaires à celles des figures 6 à 8 illustrant une autre variante de réalisation.

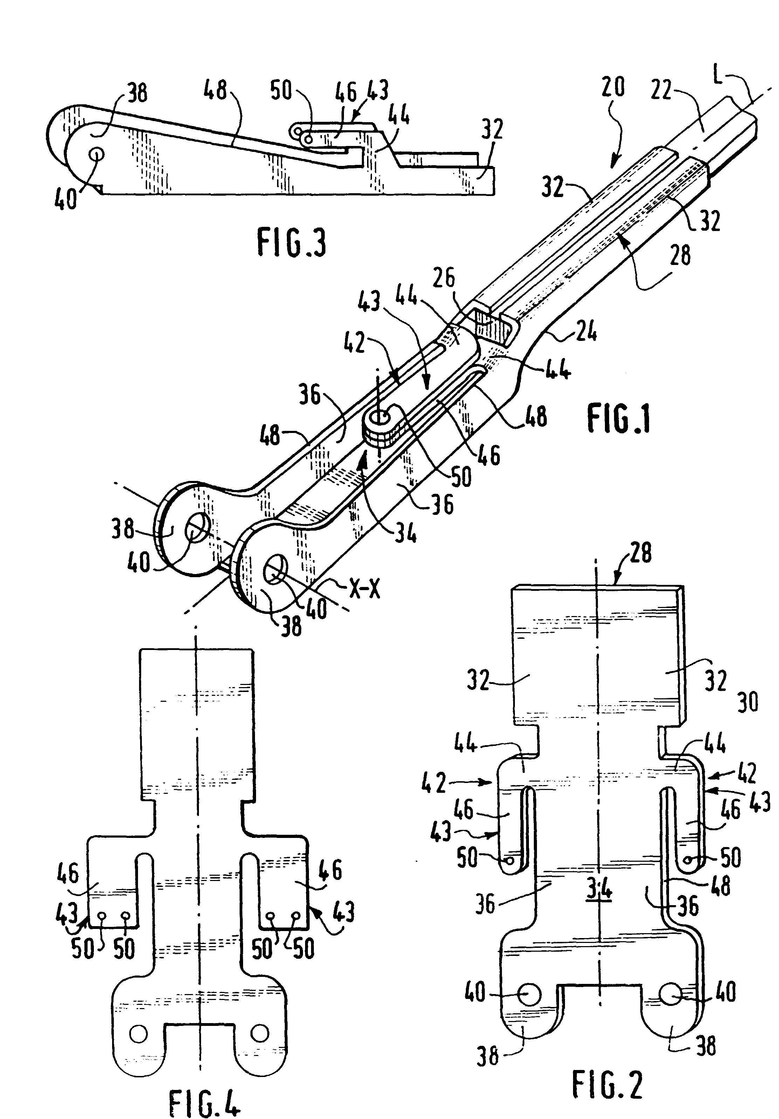

Le bras d'essuie-glace 20 illustré à la figure 1 comporte un élément principal 22 réalisé sous la forme d'une tige de section rectangulaire et un carter d'articulation 24 qui permet l'articulation du bras d'essuie-glace 20, autour d'un axe X-X sur une tête d'entraînement (non représentée).

La première extrémité 26 de la tige 22 du bras d'essuie-glace est montée sertie dans une portion de forme complémentaire 28 du carter d'articulation 24.

A cet effet, le carter 20 est réalisé par découpage et pliage à partir d'un flan de tôle 30 illustré aux figures 2 et 3.

La portion de sertissage 28, située à l'avant du carter d'articulation, est réalisée par pliage et roulage de pattes latérales 32.

La partie arrière du carter d'articulation 24 comprend un dos 34 et deux flancs latéraux 36, également appelés ailes latérales.

La partie arrière des flancs latéraux 36 comporte des pattes d'articulation 38 dans chacune desquelles est formé un trou 40 prévu pour recevoir l'axe d'articulation (non représenté) du carter 24 sur la tête d'entraînement.

Selon l'état de la technique, après les opérations requises de pliage, le carter d'articulation 24 et la tige 22 présentent l'agencement illustré à la figure 1 dans lequel les deux flancs latéraux 36 sont sensiblement parallèles à la direction longitudinale L de la tige 22 qui est elle-même perpendiculaire à l'axe d'articulation X-X.

Conformément à l'invention, les moyens 42 pour l'accrochage d'un ressort de traction sur le carter d'articulation 24 sont réalisés venus de matière avec ce dernier.

Le carter d'articulation 24 présente une symétrie générale de conception et de réalisation par rapport à un plan transversal médian contenant la direction L et perpendiculaire à l'axe X-X.

Ainsi, les moyens d'accrochage 42 sont constitués par deux pattes 43 identiques qui s'étendent en vis-à-vis l'une de l'autre.

Chaque patte de liaison ou d'accrochage 43 est constituée par une première portion 44 et par une seconde portion 46.

La première portion sensiblement rectiligne 44 s'étend transversalement vers l'intérieur depuis le bord inférieur 48 du flanc transversal correspondant 36.

La première portion 44 s'étend dans un plan parallèle à la direction L et au dos 34.

La première portion 44 se prolonge par la seconde portion rectiligne 46 qui s'étend, dans le même plan transversal, selon une direction longitudinale sensiblement perpendiculaire à celle dans laquelle s'étend la première portion 44, et ceci vers l'arrière en direction de l'axe X-X.

Chacune des deux secondes portions 46 comporte, au voisinage de son extrémité libre, un trou 50 pour l'accrochage de l'extrémité d'un ressort de traction.

Dans la position pliée illustrée à la figure 1, les deux trous 50 sont en regard l'un de l'autre, les deux pattes superposées 42 servant à l'accrochage d'un seul ressort.

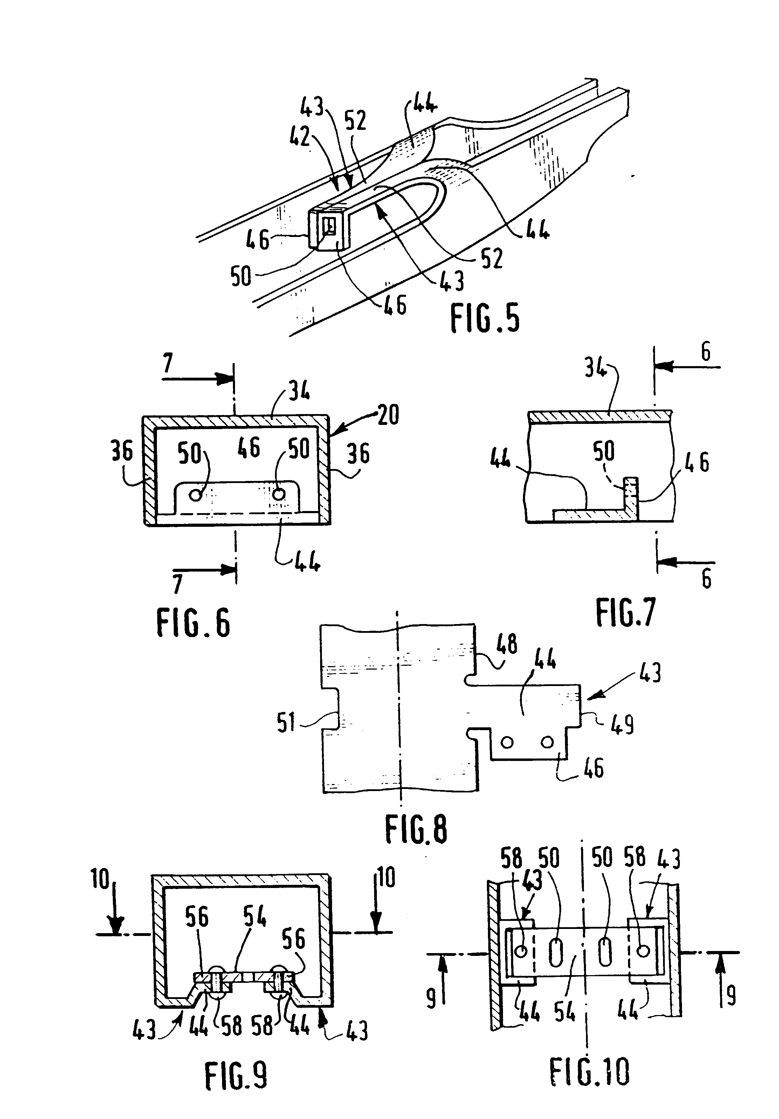

Dans la variante illustrée à la figure 4, chacune des deux secondes portions 46 comporte deux trous 50 de manière à permettre, en position pliée, l'accrochage de deux ressorts de traction parallèles.

Dans la variante de réalisation illustrée à la figure 5, les deux secondes portions 46 s'étendent dans un plan transversal perpendiculaire à la direction longitudinale L et perpendiculaire au plan transversal dans lequel s'étendent les premières portions 44.

Les deux secondes portions 46 sont reliées aux deux premières portions 44 par des portions intermédiaires 52 coplanaires aux premières portions 44.

Cette conception permet également l'utilisation, d'un ressort de compression dont une extrémité prend appui contre la face en vis-à-vis de l'une des secondes portions 46 et dont la tige de guidage peut traverser les orifices alignés 50 formés dans les secondes portions 46.

Dans la variante de réalisation illustrée à la figure 6, les deux premières portions 44 sont réalisées en une seule pièce à partir de l'un des bords 48 d'un des flancs 36 et les deux secondes portions 46 sont réalisées en une seule pièce de manière à s'étendre transversalement vers l'intérieur du carter dans un plan perpendiculaire à la direction longitudinale L et perpendiculaire à la première portion commune 44, la portion 44 présentant une extrémité 49 apte à coopérer avec un évidement correspondant 51 prévu dans le bord 48 du flanc 36 opposé à celui portant la portion 44.

Dans la variante de réalisation illustrée aux figures 9 et 10, les moyens de liaison comportent une pièce de liaison supplémentaire 54 réalisée sous la forme d'une plaque parallèle aux premières portions 44 et dont les extrémités opposés 56 sont fixées chacune respectivement à l'une des premières portions 44 par un rivet 58.

La plaque supplémentaire 54 peut comporter par exemple deux trous 50 pour l'accrochage de deux ressorts de traction.

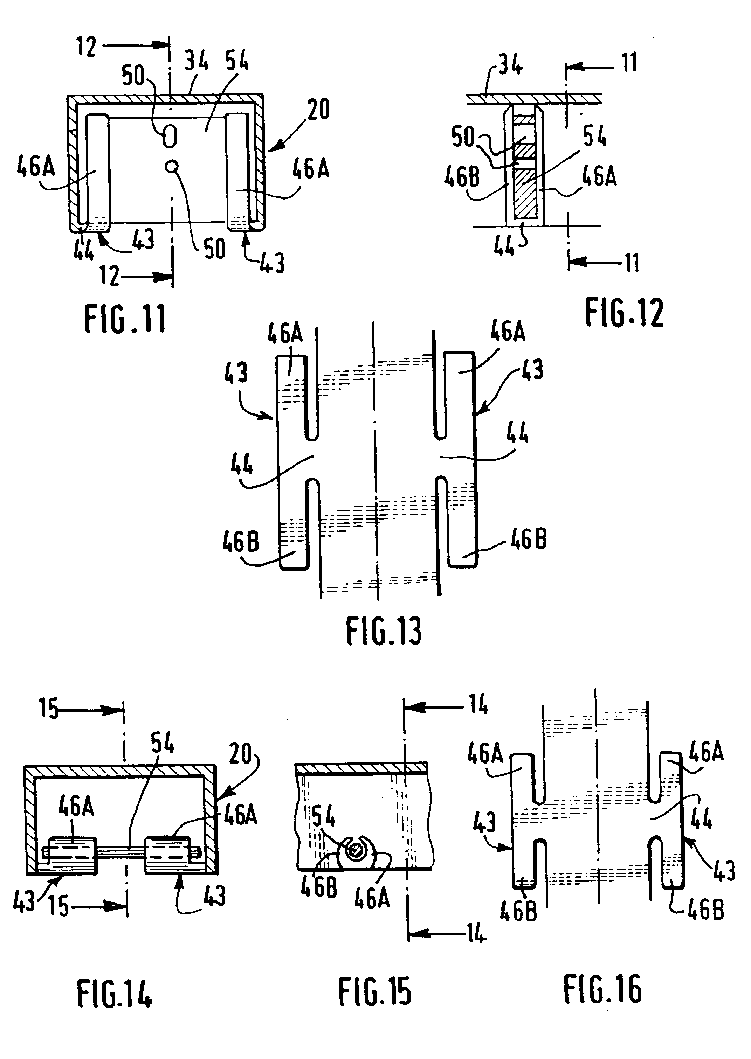

Dans la variante de réalisation illustrée aux figures 11 à 13, la pièce de liaison supplémentaire 54 est réalisée sous la forme d'une plaque qui s'étend dans un plan transversal perpendiculaire à la direction longitudinale et qui comporte deux trous d'accrochage 50.

La plaque 54 est montée sertie à l'intérieur du carter 20 grâce aux pattes de liaison 43.

A cet effet, chaque patte de liaison comporte une première portion 44 et deux secondes portions parallèles 46A et 46B qui définissent entre elles un logement qui reçoit un bord de la plaque 54.

Dans la variante de réalisation illustrée aux figures 14 à 16, la pièce supplémentaire de liaison 54 est un axe qui est monté serti à l'intérieur du carter 20 selon le même principe que la pièce 54 illustrée aux figures 11 à 13.

A cet effet, les secondes portions 46A et 46B sont roulées autour des extrémités axiales opposées de l'axe d'accrochage 54.

## Revendications

1. Bras d'essuie-glace (20) du type comportant un élément principal (22) de forme générale allongée dont une première extrémité (26) est montée articulée, autour d'un axe d'articulation (X-X), par l'intermédiaire d'une pièce d'articulation (24) réalisée en tôle découpée et pliée et présentant une forme générale de carter et comportant deux flancs latéraux (36) qui s'étendent sensiblement parallèlement à la direction longitudinale de l'élément principal (22) sur une tête d'entraînement et dont l'autre extrémité est reliée à un balai d'essuie-glace, et du type comportant des moyens (42) de liaison, agencés au voisinage de ladite première extrémité (26), pour relier le bras d'essuie-glace (20) à un organe qui le sollicite en rotation autour de son axe d'articulation (X-X), caractérisé en ce que lesdits moyens de liaison (42) comportent au moins une patte de liaison (43) réalisée en une seule pièce avec ladite pièce d'articulation (24) et s'étendant transversalement à partir d'un un bord inférieur (48) d'un des flancs latéraux (36), de manière à ce que l'organe qui sollicite le bras (20) en rotation prenne appui directement ou indirectement sur ladite patte (43).

2. Bras d'essuie-glace selon la revendication 1, caractérisé en ce que la patte de liaison (43) s'étend transversalement à l'intérieur du carter.

3. Bras d'essuie-glace selon la revendication 2, caractérisé en ce que la patte de liaison (43) comporte une première portion (44) sensiblement rectiligne qui s'étend transversalement, depuis ledit bord inférieur (48), dans un plan perpendiculaire aux flancs latéraux (36) et parallèle à la direction longitudinale (L) de l'élément principal (22).

4. Bras d'essuie-glace selon la revendication 3, caractérisé en ce que la patte de liaison (44) comporte une deuxième portion sensiblement rectiligne (46) qui prolonge la première portion (44), qui est coplanaire à la première portion (44) et qui s'étend selon la direction longitudinale (L) de l'élément principal (22).

5. Bras d'essuie-glace selon la revendication 3, caractérisé en ce que la patte de liaison (43) comporte une deuxième portion (46) sensiblement rectiligne qui s'étend dans un plan transversal perpendiculaire aux flancs latéraux (36) et perpendiculaire à la direction longitudinale (L).

6. Bras d'essuie-glace selon l'une des revendications 4 ou 5, caractérisé en ce que la seconde portion (46) comporte au moins un trou (50), notamment pour l'accrochage d'un ressort de traction.

7. Bras d'essuie-glace selon l'une quelconque des revendications 1 à 3, caractérisé en ce que les moyens de liaison comportent une pièce de liaison (54) fixée à la patte de liaison (43).

8. Bras d'essuie-glace selon la revendication 7, caractérisé en ce que la pièce de liaison (54) est fixée par sertissage, par rivetage et/ou par soudage.

9. Bras d'essuie-glace selon l'une quelconque des revendications précédentes, caractérisé en ce qu'il présente une symétrie de conception par rapport à un plan longitudinal médian.

10. Bras d'essuie-glace selon l'une des revendications 7 ou 8, caractérisé en ce que la pièce de liaison (54) s'étend transversalement et en ce que ses deux extrémités transversales opposées sont fixées à deux pattes de liaison opposées (43).

11. Bras d'essuie-glace selon la revendication 10, caractérisé en ce que la pièce de liaison (54) est une plaque qui s'étend dans un plan parallèle à la direction longitudinale (L) de l'élément principal (22).

12. Bras d'essuie-glace selon la revendication 10, caractérisé en ce que la pièce de liaison est une plaque (54) qui s'étend dans un plan perpendiculaire à la direction longitudinale (L) de l'élément principal (22).

13. Bras d'essuie-glace selon l'une des revendications 11 ou 12, caractérisé en ce que la plaque de liaison (54) comporte au moins un trou (50), par exemple pour l'accrochage d'un ressort de traction.

14. Bras d'essuie-glace selon la revendication 10, caractérisé en ce que la pièce de liaison (54) est un axe d'accrochage.

15. Bras d'essuie-glace selon l'une quelconque des revendications 10 à 14 prises en combinaison avec la revendication 3, caractérisé en ce que chacune des deux extrémités transversales de la pièce de liaison (54) est montée sertie dans un prolongement (46A, 46B) de ladite première portion (44) de la patte de liaison correspondante (43).

16. Bras d'essuie-glace selon l'une quelconque des revendications 10 à 14 prises en combinaison avec la revendication 3, caractérisé en ce que chacune des deux extrémités transversales de la pièce de liaison (54) est fixée par rivetage (58) sur ladite première portion (44) de la patte de liaison correspondante (43).

17. Bras d'essuie-glace selon la revendication 9 prise en combinaison avec l'une quelconque des revendications 4 à 6, caractérisé en ce que lesdites deuxièmes portions (46) des deux pattes de liaison opposées (43) s'étendent transversalement au moins partiellement en vis-à-vis l'une de l'autre.

18. Bras d'essuie-glace selon l'une quelconque des revendications précédentes, caractérisé en ce que l'organe qui sollicite le bras d'essuie-glace en rotation est un ressort de traction ou de compression.

## Claims

1. A screen wiper arm (20) of the type comprising a main element (22) of generally elongate form, a first end (22) of which is articulated about an articulation axis (X-X) through an interposed articulation piece (24), made from sheet metal by press-forming and bending in the general form of a casing and comprising two side flanks (36), which extend substantially parallel to the longitudinal direction of the main element (22) on a drive head, the other end of the main element being connected to a screen wiper blade, and of the type comprising coupling means (42) arranged close to the said first end (26) so as to couple the screen wiper arm (20) to a member which urges it in rotation about its articulation axis (X-X), characterised in that the said coupling means (42) comprise at least one connecting lug (43) made integrally with the said articulation piece (24) and extending transversely from a lower edge (48) of one of the side flanks (36), in such a way that the member which urges the arm (20) in rotation bears directly or indirectly on the said lug (43).

2. A screen wiper arm according to Claim 1,
characterised in that the connecting lug (43) extends transversely within the casing.

3. A screen wiper arm according to Claim 2,
characterised in that the connecting lug (43) includes a substantially rectilinear first portion (44) which extends transversely from the said lower edge (48), in a plane at right angles to the side flanks (36) and parallel to the longitudinal direction (L) of the main element (22).

4. A screen wiper arm according to Claim 3,
characterised in that the connecting lug (44) includes a substantially rectilinear second portion (46) which extends the first portion (44), and which is coplanar with the first portion (44) and extends in the longitudinal direction (L) of the main element (22).

5. A screen wiper arm according to Claim 3,
characterised in that the connecting lug (43) includes a substantially rectilinear second portion (46) which extends in a transverse plane at right angles to the side flanks (36) and at right angles to the longitudinal direction (L).

6. A screen wiper arm according to Claim 4 or Claim 5,
characterised in that the second portion (46) has at least one hole (50), in particular for hooking engagement with a tension spring.

7. A screen wiper arm according to any one of Claims 1
to 3, characterised in that the coupling means include a connecting member (54) fixed to the connecting lug (43).

8. A screen wiper arm according to Claim 7,
characterised in that the connecting member (54) is secured by seaming, by riveting, and/or by welding.

9. A screen wiper arm according to any one of the preceding Claims, characterised in that it has a symmetry of design with respect to a longitudinal median plane.

10. A screen wiper arm according to Claim 7 or Claim 8, characterised in that the connecting member (54) extends transversely, and in that its two opposed transverse ends are fixed to two opposed connecting lugs (43).

11. A screen wiper arm according to Claim 10,
characterised in that the connecting member (54) is a plate member which lies in a plane parallel to the longitudinal direction (L) of the main element (22).

12. A screen wiper arm according to Claim 10,
characterised in that the connecting member is a plate member (54) which lies in a plane at right angles to the longitudinal direction (L) of the main element (22).

13. A screen wiper arm according to Claim 11 or Claim 12, characterised in that the connecting plate member (54) has at least one hole (50), for example for hooking engagement with a tension spring.

14. A screen wiper arm according to Claim 10,
characterised in that the connecting member (54) is a hooking pin.

15. A screen wiper arm according to any one of Claims 10 to 14 in combination with Claim 3, characterised in that each of the transverse ends of the connecting member (54) is seamed into an extension (46A, 46B) of the said first portion (44) of the corresponding connecting lug (43).

16. A screen wiper arm according to any one of Claims 10 to 14 in combination with Claim 3, characterised in that each of the two transverse ends of the connecting member (54) is secured by riveting (58) on the said first portion (44) of the corresponding connecting lug (43).

17. A screen wiper arm according to Claim 9 in combination with any one of Claims 4 to 6,
characterised in that the said second portions (46) of the two opposed connecting lugs (43) extend transversely, being at least partly in facing relationship with each other.

18. A screen wiper arm according to any one of the preceding Claims, characterised in that the member which urges the screen wiper arm in rotation is a tension or compression spring.

## Patentansprüche

1. Scheibenwischerarm (20) in der Ausführung mit einem Hauptelement (22) mit einer allgemein länglichen Form, dessen erstes Ende (26) an einem Antriebskopf schwenkbar um eine Gelenkachse (X-X) anhand eines aus gestanztem und gebogenem Blech ausgeführten Gelenkteils (24) gelagert ist, das eine allgemeine Gehäuseform aufweist und zwei Seitenteile (36) umfaßt, die sich in etwa parallel zur Längsrichtung des Hauptelements (22) erstrecken, und dessen anderes Ende mit einem Scheibenwischerblatt verbunden ist, und in der Ausführung mit Verbindungsmitteln (42), die in der Nähe des ersten Endes (26) angeordnet sind, um den Scheibenwischerarm (20) mit einem Organ zu verbinden, das ihn drehend um seine Gelenkachse (X-X) beansprucht, **dadurch gekennzeichnet**, daß die besagten Verbindungsmittel (42) wenigstens einen Verbindungsansatz (43) umfassen, der einteilig mit dem besagten Gelenkteil (24) ausgeführt ist und der sich quer von einer Unterkante (48) eines der Seitenteile (36) aus erstreckt, so daß das Organ, das den Scheibenwischerarm (20) drehend beansprucht, direkt oder indirekt auf dem besagten Ansatz (43) zur Auflage kommt.

2. Scheibenwischerarm nach Anspruch 1 , **dadurch gekennzeichnet**, daß sich der Verbindungsansatz (43) quer im Innern des Gehäuses erstreckt.

3. Scheibenwischerarm nach Anspruch 2 , **dadurch gekennzeichnet**, daß der Verbindungsansatz (43) einen ersten, in etwa geradlinigen Abschnitt (44) umfaßt, der sich in Querrichtung von der besagten Unterkante (48) aus in einer Ebene erstreckt, die senkrecht zu den Seitenteilen (36) und parallel zur Längsrichtung (L) des Hauptelements (22) verläuft.

4. Scheibenwischerarm nach Anspruch 3 , **dadurch gekennzeichnet**, daß der Verbindungsansatz (44) einen zweiten, in etwa geradlinigen Abschnitt (46) umfaßt, der den ersten Abschnitt (44) verlängert, der koplanar mit dem ersten Abschnitt (44) verläuft und der sich entlang der Längsrichtung (L) des Hauptelements (22) erstreckt.

5. Scheibenwischerarm nach Anspruch 3 , **dadurch gekennzeichnet**, daß der Verbindungsansatz (43) einen zweiten, in etwa geradlinigen Abschnitt (46) umfaßt, der sich in einer Querebene erstreckt, die senkrecht zu den Seitenteilen (36) und senkrecht zur Längsrichtung (L) verläuft.

6. Scheibenwischerarm nach einem der Ansprüche 4 oder 5 , **dadurch gekennzeichnet**, daß der zweite Abschnitt (46) wenigstens ein Loch (50), insbesondere für das Einsetzen einer Zugfeder, umfaßt.

7. Scheibenwischerarm nach einem der Ansprüche 1 bis 3, **dadurch gekennzeichnet**, daß die Verbindungsmittel ein Verbindungsteil (54) umfassen, das am Verbindungsansatz (43) befestigt ist.

8. Scheibenwischerarm nach Anspruch 7 , **dadurch gekennzeichnet**, daß das Verbindungsteil (54) mittels Falzung, mittels Nieten und/oder mittels Schweißen befestigt wird.

9. Scheibenwischerarm nach einem der vorangehenden Ansprüche, **dadurch gekennzeichnet**, daß er eine symmetrische Gestaltung bezogen auf eine Längsmittelebene aufweist.

10. Scheibenwischerarm nach einem der Ansprüche 7 oder 8 , **dadurch gekennzeichnet**, daß sich das Verbindungsteil (54) in Querrichtung erstreckt und daß seine beiden entgegengesetzten Querenden an zwei entgegengesetzten Verbindungsansätzen (43) befestigt sind.

11. Scheibenwischerarm nach Anspruch 10, **dadurch gekennzeichnet**, daß das Verbindungsteil (54) eine Platte ist, die sich in einer Ebene erstreckt, die parallel zur Längsrichtung (L) des Hauptelements (22) verläuft.

12. Scheibenwischerarm nach Anspruch 10, **dadurch gekennzeichnet**, daß das Verbindungsteil eine Platte (54) ist, die sich in einer Ebene erstreckt, die senkrecht zur Längsrichtung (L) des Hauptelements (22) verläuft.

13. Scheibenwischerarm nach einem der Ansprüche 11 oder 12, **dadurch gekennzeichnet**, daß die Verbindungsplatte (54) wenigstens ein Loch (50), beispielsweise für das Einsetzen einer Zugfeder, enthält.

14. Scheibenwischerarm nach Anspruch 10, **dadurch gekennzeichnet**, daß das Verbindungsteil (54) eine Einsetzachse ist.

15. Scheibenwischerarm nach einem der Ansprüche 10 bis 14 in Kombination mit Anspruch 3, **dadurch gekennzeichnet**, daß jedes der beiden Querenden des Verbindungsteils (54) eingefalzt in einer Verlängerung (46A, 46B) des besagten ersten Abschnitts (44) des entsprechenden Verbindungsansatzes (43) gelagert ist.

16. Scheibenwischerarm nach einem der Ansprüche 10 bis 14 in Kombination mit Anspruch 3, **dadurch gekennzeichnet**, daß jedes der beiden Querenden des Verbindungsteils (54) mittels Nieten (58) an dem besagten ersten Abschnitt (44) des entsprechenden Verbindungsansatzes (43) gelagert ist.

17. Scheibenwischerarm nach Anspruch 9 in Kombination mit einem der Ansprüche 4 bis 6, **dadurch gekennzeichnet**, daß sich die besagten zweiten Abschnitte (46) der beiden entgegengesetzten Verbindungsansätze (43) in Querrichtung wenigstens teilweise einander gegenüber erstrecken.

18. Scheibenwischerarm nach einem der vorangehenden Ansprüche, **dadurch gekennzeichnet**, daß das Organ, das den Scheibenwischerarm drehend beansprucht, eine Zug- oder Druckfeder ist.
